# FASCICULE DE BREVET EUROPEEN

(11) **EP 4 263 214 B1**
(45) Date de publication et mention de la délivrance du brevet: **29.01.2025**
(21) Numéro de dépôt: 21851811.6
(22) Date de dépôt: 08.12.2021
(51) Int. Cl.: B32B 18/00, F01D 5/14, F01D 5/28, C04B 37/00, C04B 35/80, C04B 35/645, C04B 35/638, C04B 35/634, C04B 35/628, C04B 35/622, C04B 35/573, B29B 11/16

(54) **PROCEDE DE FABRICATION D'UNE AUBE DE TURBOMACHINE EN MATERIAU COMPOSITE A MATRICE CERAMIQUE**
VERFAHREN ZUR HERSTELLUNG EINER TURBOMASCHINENSCHAUFEL AUS KERAMIKMATRIXVERBUNDSTOFF
METHOD FOR MANUFACTURING A CERAMIC MATRIX COMPOSITE TURBOMACHINE BLADE

(30) Priorité: 18.12.2020 FR 2013613
(43) Date de publication de la demande: 25.10.2023
(73) Titulaire: Safran Ceramics, 33185 Le Haillan (FR)
(72) Inventeur: DELEHOUZE, Arnaud, 77550 MOISSY-CRAMAYEL (FR); BOUILLON, Eric, 77550 MOISSY-CRAMAYEL (FR); GARNIER, Gildas, 77550 MOISSY-CRAMAYEL (FR); ROUSSILLE, Clément, Marie, Benoît, 77550 MOISSY-CRAMAYEL (FR)
(74) Mandataire: Cabinet Beau de Loménie
(86) Numéro de dépôt international: PCT/FR2021/052236
(87) Numéro de publication internationale: WO 2022/129733

(56) Documents cités:
- WO-A1-2019/122760
- WO-A1-2020/025878
- FR-A1- 2 961 845
- FR-A1- 3 081 370
- US-A1- 2016 177 745
- US-A1- 2019 323 363
- US-A1- 2019 376 389

## Description

### Domaine Technique

La présente invention se rapporte au domaine général de la conception de matériaux composites à matrice céramique (CMC), et plus particulièrement à la conception d'une pièce en matériau composite CMC intégrant à la fois une partie structurale et une partie fonctionnelle, distincte de la partie structurale.

### Technique antérieure

Les pièces en matériau CMC peuvent être réalisées grâce à des préformes textiles tissées à base de fibres longues continues. Néanmoins, le tissage peut être compliqué à réaliser pour les parties fonctionnelles de la pièce qui peuvent présenter une forme complexe.

Les documents US 2016/177745 et US 2019/323363 décrivent une aube de turbomachine réalisée en matériau CMC comprenant une extrémité abrasive. Les aubes de ces deux documents ne comprennent pas de partie fonctionnelle de géométrie complexe, par exemple une partie fonctionnelle comprenant plusieurs portions fonctionnelles.

Le document WO 2020/025878 décrit une aube de turbine réalisée en matériau CMC ayant un état de surface lisse grâce à l'application de plis non-tissés pré-imprégnés. Le document FR 2 961 845 décrit une aube de turbomachine réalisée en matériau CMC à partir d'une seule préforme fibreuse tissée en trois dimensions. Ce document ne propose pas l'utilisation de fibres courtes pour former une partie fonctionnelle.

Il est donc souhaitable de disposer d'un procédé de fabrication d'une pièce en matériau CMC fonctionnalisée et ayant la tenue structurale souhaitée qui soit relativement simple à mettre en oeuvre.

### Exposé de l'invention

L'invention concerne un procédé de fabrication d'une pièce en matériau composite à matrice céramique comprenant au moins une partie structurale et une partie fonctionnelle solidaire de la partie structurale, la partie fonctionnelle comprenant trois portions fonctionnelles : un muret aval, un muret amont et une plateforme du pied de l'aube ; le procédé comprenant :
- l'obtention d'un assemblage comprenant une première préforme de la partie fonctionnelle montée sur une deuxième préforme de la partie structurale ou sur la partie structurale, la première préforme comprenant un renfort fibreux de fibres courtes et la deuxième préforme ou la partie structurale comprenant un renfort fibreux tissé, et
- la densification au moins de la première préforme de l'assemblage par infiltration par une composition fondue.

La partie structurale confère à la pièce la tenue structurale recherchée tandis que la partie fonctionnelle est une partie peu sollicitée thermo-mécaniquement permettant d'assurer une fonction non structurale, comme une fonction d'étanchéité ou anti-basculement. L'emploi d'un renfort fibreux tissé garantit la tenue mécanique souhaitée pour la partie structurale et l'emploi de fibres courtes permet de s'affranchir d'une étape de tissage pour la fabrication de la partie fonctionnelle et des limitations associées en termes de géométrie réalisable. La fabrication d'une pièce en matériau CMC est ainsi simplifiée, grâce à la dissociation entre les fonctions et singularités géométriques, et la structure de la pièce.

Le procédé de fabrication de l'invention peut également être utilisé comme procédé de réparation afin de fabriquer une pièce réparée.

Selon une caractéristique particulière de l'invention, la première préforme est montée sur la deuxième préforme et il y a co-densification des première et deuxième préformes par la composition fondue.

La co-densification permet de lier les deux préformes ensemble par l'infiltration de la composition fondue dans les deux préformes et permet également de former une matrice commune pour les parties structurale et fonctionnelle.

Selon une autre caractéristique particulière de l'invention, la première préforme est montée sur la partie structurale et la composition fondue permet de braser la partie fonctionnelle à la partie structurale.

Dans ce dernier cas, la première préforme est montée sur la partie structurale qui est en matériau CMC et déjà densifiée. La densification de la préforme de la partie fonctionnelle directement sur la partie structurale permet de densifier la préforme et de braser cette partie fonctionnelle à la partie structurale par la composition fondue. La partie fonctionnelle est ainsi liée à la partie structurale dans la pièce obtenue. Cela permet notamment de réparer et remplacer une partie fonctionnelle d'une pièce en matériau CMC. On peut ainsi réparer un défaut, comme une zone endommagée d'une partie fonctionnelle de la pièce en ajoutant une nouvelle portion sur la partie fonctionnelle endommagée en remplacement du défaut, ou en remplaçant toute la partie fonctionnelle endommagée par une nouvelle partie fonctionnelle. Selon sa nature, sa taille et son emplacement, il est également possible de réparer un défaut présent dans une partie structurale en brasant la première préforme sur ou à la place du défaut de la partie structurale.

Selon un mode de réalisation de l'invention, le procédé comprend en outre la formation de la première préforme, cette formation comprend une formation d'une première ébauche comprenant le renfort fibreux de fibres courtes présent dans un liant, un déliantage de la première ébauche et une éventuelle compaction de la première ébauche déliantée de sorte à obtenir la première préforme.

Le liant permet de lier les fibres courtes entre elles ainsi que les éventuelles autres charges présentes. Il a pour effet de réduire le caractère friable de l'ébauche avant son déliantage. Cela permet de manipuler plus facilement l'ébauche pour, par exemple, l'introduire dans un moule.

Selon une caractéristique particulière de l'invention, la première ébauche comprend en outre des premières charges additionnelles présentes dans le liant et distinctes des fibres courtes du renfort, les premières charges additionnelles ayant une surface métallique ou céramique.

Selon une autre caractéristique particulière de l'invention, la première préforme est montée sur la deuxième préforme et l'obtention de l'assemblage comprend une mise en forme d'une deuxième ébauche comprenant le renfort fibreux tissé de sorte à obtenir la deuxième préforme.

Selon une autre caractéristique particulière de l'invention, la deuxième ébauche comprend en outre des deuxièmes charges additionnelles ayant une surface métallique ou céramique.

Selon une autre caractéristique particulière de l'invention, on réalise une consolidation de la première préforme par frittage des premières charges additionnelles avant la densification.

Selon une autre caractéristique particulière de l'invention, on réalise une consolidation de la deuxième préforme par frittage des deuxièmes charges additionnelles avant la densification.

Le frittage des premières et/ou deuxièmes charges additionnelles dans les préformes permet de réduire le taux volumique de pores dans les préformes pour que les préformes aient une meilleure tenue notamment durant la densification. Il permet également de réduire le taux de silicium libre dans la pièce finale, car la porosité à remplir est plus faible.

Selon une autre caractéristique particulière de l'invention, la partie fonctionnelle est l'une au moins d'une partie d'étanchéité ou d'une partie anti-basculement de la pièce.

La partie fonctionnelle peut également être une portion de réparation d'une partie fonctionnelle ou structurale, par exemple sous forme de patch.

En variante, la partie fonctionnelle peut également être un sur-profil aérodynamique.

Plus précisément, dans le cas d'un sur-profil aérodynamique, la partie massive et centrale de l'aubage peut être une préforme structurale et le profil aérodynamique de forme complexe peut être obtenu en ajoutant une partie fonctionnelle autour de la préforme structurale de forme simple. Dans le cas d'un procédé de réparation, cela permet de pouvoir reformer et/ou réparer aisément le profil aérodynamique complexe après plusieurs milliers d'heures de vol.

Selon une autre caractéristique particulière de l'invention, la pièce est une pièce de turbomachine.

Selon une autre caractéristique particulière de l'invention, la pièce est une aube de turbomachine.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif.
[Fig. 1] La figure 1 représente, de manière schématique et partielle, une pièce en matériau composite à matrice céramique selon un mode de réalisation de l'invention.
[Fig. 2] La figure 2 représente, de manière schématique et partielle, un procédé de fabrication d'une pièce en matériau CMC selon un mode de réalisation de l'invention.
[Fig. 3] La figure 3 représente, de manière schématique et partielle, un procédé de fabrication d'une pièce en matériau CMC selon un mode de réalisation de l'invention.

### Description des modes de réalisation

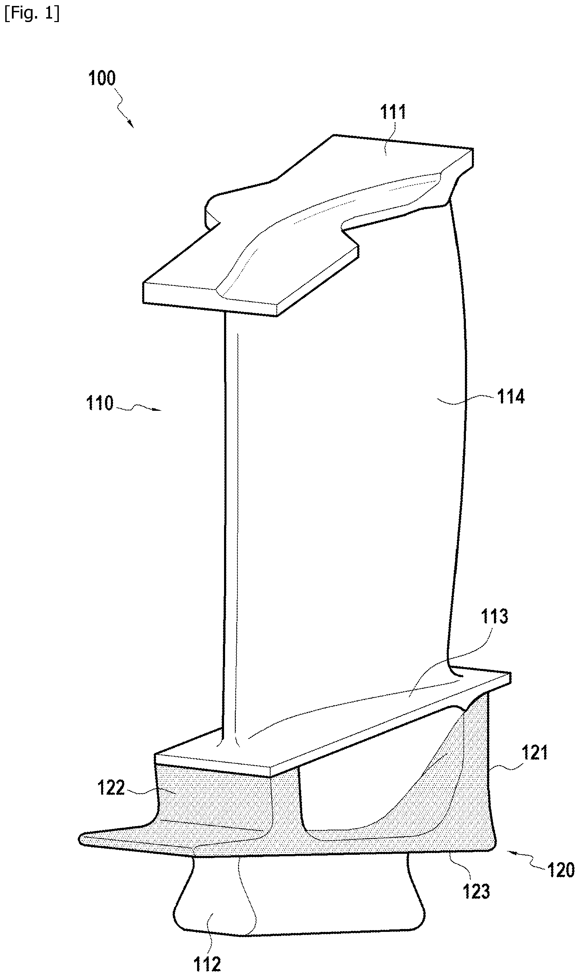

La figure 1 représente, de manière schématique et partielle, une pièce 100 en matériau composite à matrice céramique (CMC) selon un mode de réalisation de l'invention.

Dans cet exemple de réalisation, la pièce 100 en matériau CMC est une aube de turbomachine comprenant une partie structurale 110 et une partie fonctionnelle 120. Dans l'exemple illustré, la partie structurale 110 comprend notamment une partie de pale 114 définissant le profil aérodynamique et comprenant une face intrados et une face extrados, une plateforme supérieure 111 et une plateforme inférieure 113 qui définissent la veine de l'aube 100, et un pied d'aube 112. Conformément à l'invention, la partie structurale 110 comprend un renfort fibreux tissé, c'est-à-dire qu'elle est réalisée en un matériau CMC comprenant un renfort fibreux constitué de fibres continues et densifié par une matrice céramique. Le renfort fibreux peut être obtenu par un tissage tridimensionnel, par exemple avec une armure de tissage interlock.

La partie fonctionnelle 120 est une partie non structurale, et est destinée à assurer une fonction différente d'une fonction structurale. Selon l'invention, la partie fonctionnelle 120 comprend trois portions fonctionnelles : un muret aval 121, un muret amont 122 et la plateforme du pied 123. Conformément à l'invention, ces portions de la partie fonctionnelle sont réalisées en matériau CMC comprenant un renfort fibreux constitué de fibres courtes et densifié par une matrice céramique.

Les murets 121 et 122 ont pour rôle d'assurer une étanchéité axiale. La plateforme du pied 123 a pour rôle de fermer la cavité dans laquelle se trouve le pied d'aube 112 pour créer une chambre de pression. Cette plateforme 123 permet également d'empêcher le basculement du pied 112.

Les portions fonctionnelles 121, 122 et 123 sont solidaires de la partie structurale 110.

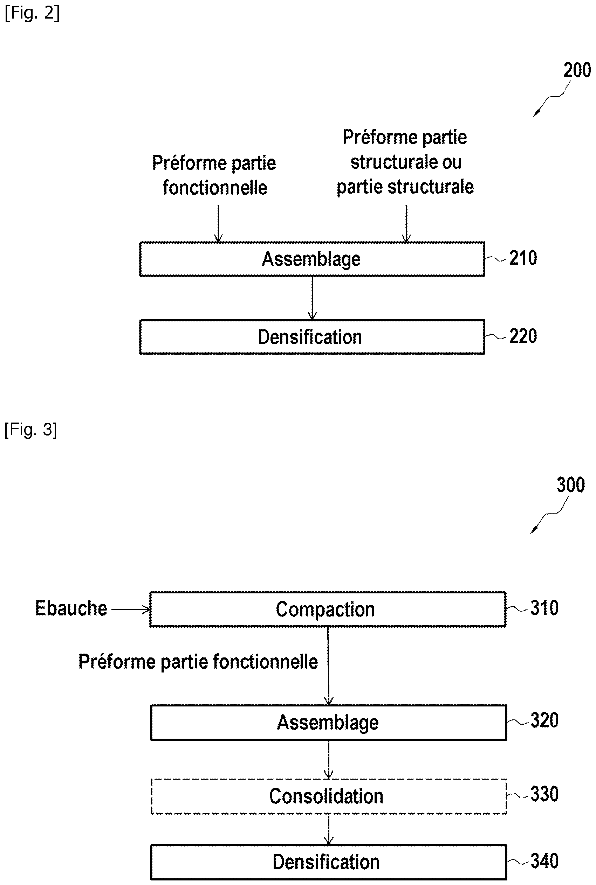

La figure 2 représente un procédé de fabrication 200 d'une pièce en matériau CMC selon un mode de réalisation de l'invention.

La pièce finale en matériau CMC comprend au moins une partie fonctionnelle solidaire d'une partie structurale. Le procédé 200 comprend d'abord l'obtention d'un assemblage 210. L'assemblage comprend une première préforme de la partie fonctionnelle montée sur soit une deuxième préforme de la partie structurale non densifiée ou incomplètement densifiée, soit la partie structurale en matériau CMC, déjà densifiée.

La première préforme comprend un renfort fibreux de fibres courtes tandis que la deuxième préforme ou la partie structurale comprend un renfort fibreux tissé. Plus particulièrement, la partie structurale comprend un renfort fibreux tissé densifié par une matrice céramique.

Le procédé 200 comprend ensuite la densification 220 de la première préforme de l'assemblage. La densification 220 est faite par infiltration de la première préforme par une composition fondue comprenant par exemple du silicium (technique d'infiltration à l'état fondu, « Melt-Infiltration »). La densification 220 permet de former une matrice céramique dans la première préforme et de lier la première préforme à la deuxième préforme ou à la partie structurale.

Si lors de l'obtention de l'assemblage 210, on monte la première préforme sur la deuxième préforme, il est également possible de co-densifier les première et deuxième préformes par la composition fondue lors de l'étape de densification 220. Cela permet de former également une matrice céramique dans la deuxième préforme tout en liant les deux préformes entre elles. On forme ainsi une matrice céramique commune densifiant la première préforme et la deuxième préforme. La continuité matricielle entre les deux préformes est améliorée et cela permet de réduire les singularités de conception, notamment les zones de faiblesse de la pièce finale.

La figure 3 représente un procédé de fabrication 300 d'une pièce en matériau CMC selon un autre mode de réalisation de l'invention.

La pièce finale en matériau CMC comprend toujours une partie fonctionnelle solidaire d'une partie structurale.

Le procédé 300 comprend d'abord la compaction 310 d'une première ébauche. On peut former la première ébauche à partir d'un renfort fibreux de fibres courtes présent dans un liant que l'on déliante avant de réaliser la compaction 310. La compaction 310 de la première ébauche déliantée permet d'obtenir une première préforme de la partie fonctionnelle. Le liant permet de réduire le caractère friable de l'ébauche et de manipuler plus facilement l'ébauche avant de la délianter pour la compaction 310.

La compaction 310 peut résulter en une réduction d'au moins 10 % d'au moins une dimension de l'ébauche.

La compaction 310 peut être une compaction isostatique à chaud, ou une compaction isostatique à froid ou encore un frittage flash (« Spark Plasma Sintering » en anglais).

Ensuite, on place cette première préforme sur une deuxième préforme de la partie structurale ou sur la partie structurale de la pièce de manière à obtenir un assemblage 320. Comme indiqué précédemment, la deuxième préforme ou la partie structurale comprend un renfort fibreux tissé, et plus particulièrement la partie structurale comprend un renfort fibreux tissé densifié par une matrice céramique.

Enfin, on densifie la première préforme 340 par infiltration de la première préforme par une composition fondue. Cette densification 340 permet de former une matrice céramique dans la première préforme et de lier la première préforme à la partie structurale ou à la deuxième préforme.

Comme précédemment, si la première préforme est montée sur une deuxième préforme de la partie structurale et non directement sur la partie structurale, on peut co-densifier les deux préformes lors de la densification 340. Cela permet de former une matrice céramique commune dans les première et deuxième préformes.

De plus, la première ébauche peut également comprendre des charges additionnelles dans le liant distinctes des fibres courtes, et ayant une surface métallique ou céramique. Grâce à ces charges additionnelles, on peut consolider la première préforme avant la densification par la composition fondue. La consolidation 330 de la première préforme est optionnelle et peut être réalisée entre l'obtention de l'assemblage 320 et la densification 340 ou avant le positionnement de la première préforme sur la deuxième préforme ou sur la partie structurale de sorte à former l'assemblage. La consolidation 330 peut être réalisée par frittage des premières charges additionnelles. Il va des connaissances générales de l'homme du métier de déterminer les conditions opératoires de température et de durée de frittage en fonction des matériaux utilisés. Elle permet de réduire la friabilité de la première préforme et d'en augmenter la tenue mécanique.

Par ailleurs, la deuxième préforme peut être obtenue à partir d'une deuxième ébauche mise en forme et comprenant le renfort fibreux tissé.

La deuxième ébauche peut également comprendre des deuxièmes charges additionnelles ayant une surface métallique ou céramique. Ainsi, comme pour la première préforme, on peut consolider la deuxième préforme. Cette consolidation, optionnelle, de la deuxième préforme peut être réalisée en même temps que la consolidation 330 de la première préforme ou avant le positionnement de la première préforme. Elle peut également être réalisée par frittage des deuxièmes charges additionnelles. Elle permet ainsi de réduire la friabilité de la deuxième préforme et d'augmenter la tenue mécanique de l'assemblage des deux préformes.

Il est également possible de densifier séparément les première et deuxième ébauches des deux préformes, puis ensuite de les braser ensemble afin de former l'assemblage.

Quel que soit le mode de réalisation du procédé, les fibres courtes peuvent avoir une longueur comprise entre 50 µm et 5000 µm, par exemple entre 50 µm et 1000 µm, par exemple entre 100 µm et 500 µm, par exemple sensiblement de 250 µm. Sauf mention contraire, une dimension « moyenne » désigne la dimension donnée par la distribution granulométrique statistique à la moitié de la population, dite d₅₀.

De plus, ces fibres courtes peuvent être des fibres de carbure de silicium SiC présentant une teneur en oxygène inférieure ou égale à 1 % en pourcentage atomique. Ces fibres en SiC peuvent par exemple être des fibres fournies sous la dénomination « Hi-Nicalon-S » par la société japonaise NGS.

Quel que soit le mode de réalisation du procédé de fabrication, les fibres courtes et/ou les fibres longues comprises dans le renfort de la deuxième préforme peuvent être revêtues d'une couche d'interphase, par exemple d'une couche d'interphase en nitrure de bore (BN) ou en pyrocarbone (PyC). Cette couche d'interphase permet de dévier les fissures de la matrice céramique lors de l'utilisation de la pièce. La couche d'interphase a, par exemple, une épaisseur de 500 nm. La couche d'interphase peut également être revêtue d'une couche de protection, par exemple d'une couche de carbure de silicium de quelques microns d'épaisseur. Cette couche de protection permet de protéger l'interphase des potentielles attaques chimiques de la composition fondue lors de l'infiltration de la première préforme et d'éventuellement de la deuxième préforme.

Quel que soit le mode de réalisation du procédé de fabrication, les charges additionnelles peuvent être des particules de carbure de silicium ou de disiliures métalliques. Elles participent à la formation de la matrice lors de la densification.

Les charges additionnelles de la première préforme de la partie fonctionnelle peuvent être revêtues d'une couche métallique. La couche métallique peut avoir une épaisseur comprise entre 100 nm et 5000 nm, par exemple comprise entre 500 nm et 1500 nm.

Quel que soit le mode de réalisation du procédé de fabrication, la composition fondue peut correspondre à du silicium fondu seul ou à un alliage de silicium à l'état fondu lequel contient en outre un ou plusieurs autres éléments tels que du titane, du molybdène, du bore, du fer ou du niobium. La teneur massique en silicium dans la composition fondue peut être supérieure ou égale à 50 %, voire à 90 %. La composition fondue peut également correspondre à un alliage fusible et compatible thermochimiquement avec les charges et les renforts fibreux mis en oeuvre dans les préformes et ébauches. La composition fondue peut encore correspondre à des disiliciures métalliques, comme par exemple le disiliciure de titane TiSi₂ ou le disiliciure de molybdène MoSi₂.

Quel que soit le mode de réalisation du procédé de fabrication, la première préforme et/ou la deuxième préforme peuvent également être préalablement siliciurées avant leur assemblage de sorte à ne remplir qu'une partie seulement de leur porosité. Cette siliciuration préliminaire permet notamment d'associer des matériaux de composition différente afin de donner, par exemple, à la pièce finale des gradients de propriété thermomécaniques, par exemple des gradients de coefficient thermique afin de favoriser l'intégration de la pièce finale.

Quel que soit le mode de réalisation du procédé de fabrication, les liants utilisables pour réaliser l'ébauche de la première préforme peuvent comprendre au moins un polymère thermoplastique. Par exemple, le liant peut comprendre au moins un composé choisi parmi l'alcool polyvinylique (PVA), le polyéthylène glycol (PEG), le polypropylène (PP), le polyoxyméthylène (POM) ou le polytéréphtalate d'éthylène (PET).

Les liants peuvent également comprendre au moins un polymère thermodurcissable. Par exemple, ils peuvent comprendre au moins un composé choisi parmi les résines époxydes, les résines phénoliques ou les résines pré-céramiques.

Quel que soit le mode de réalisation du procédé de fabrication, dans la première ébauche, avant déliantage, la teneur volumique en liant peut être comprise entre 15 % et 55 %, la teneur volumique des charges (c'est-à-dire des fibres courtes et des charges additionnelles) peut être comprise entre 45 % et 85 %. Parmi les charges, les fibres courtes peuvent avoir une teneur volumique comprise entre 10 % et 35 %, par exemple entre 15 % et 25 % et les charges additionnelles représentent le complément des fibres courtes. Après infiltration par la composition fondue, la porosité résiduelle de la pièce finale est inférieure ou égale à 15 %.

L'expression « compris(e) entre ... et ... » doit se comprendre comme incluant les bornes.

## Revendications

1. Procédé de fabrication (200, 300) d'une aube de turbomachine (100) en matériau composite à matrice céramique comprenant au moins une partie structurale (110) et une partie fonctionnelle (120) solidaire de la partie structurale, la partie fonctionnelle comprenant trois portions fonctionnelles : un muret aval (121), un muret amont (122) et une plateforme du pied (123) de l'aube et le procédé comprenant :
- l'obtention d'un assemblage (210, 320) comprenant une première préforme de la partie fonctionnelle montée sur une deuxième préforme de la partie structurale ou sur la partie structurale, la première préforme comprenant un renfort fibreux de fibres courtes, ayant une longueur comprise entre 50 µm et 5000 µm, et la deuxième préforme ou la partie structurale comprenant un renfort fibreux tissé, et
- la densification (220, 340) au moins de la première préforme de l'assemblage par infiltration par une composition fondue.

2. Procédé de fabrication selon la revendication 1, dans lequel la première préforme est montée sur la deuxième préforme et dans lequel, il y a co-densification des première et deuxième préformes par la composition fondue.

3. Procédé de fabrication selon la revendication 1, dans lequel la première préforme est montée sur la partie structurale et dans lequel la composition fondue permet de braser la partie fonctionnelle à la partie structurale.

4. Procédé de fabrication (300) selon l'une quelconque des revendications 1 à 3, dans lequel l'obtention de l'assemblage (320) comprend en outre la formation de la première préforme, cette formation comprenant une formation d'une première ébauche comprenant le renfort fibreux de fibres courtes présent dans un liant, un déliantage de la première ébauche et une compaction (310) de la première ébauche déliantée de sorte à obtenir la première préforme.

5. Procédé de fabrication selon la revendication 4, dans lequel la première ébauche comprend en outre des premières charges additionnelles présentes dans le liant et distinctes des fibres courtes du renfort, les premières charges additionnelles ayant une surface métallique ou céramique.

6. Procédé de fabrication selon l'une quelconque des revendications 1, 2, 4 ou 5, dans lequel la première préforme est montée sur la deuxième préforme et l'obtention de l'assemblage comprend une mise en forme d'une deuxième ébauche comprenant le renfort fibreux tissé de sorte à obtenir la deuxième préforme.

7. Procédé de fabrication selon la revendication 6, dans lequel la deuxième ébauche comprend en outre des deuxièmes charges additionnelles ayant une surface métallique ou céramique.

8. Procédé de fabrication (300) selon l'une quelconque des revendications 5, 6 ou 7, rattachées à la revendication 5, dans lequel on réalise une consolidation (330) de la première préforme par frittage des premières charges additionnelles avant la densification.

9. Procédé de fabrication selon la revendication 7 ou 8 rattachée à la revendication 7, dans lequel on réalise une consolidation de la deuxième préforme par frittage des deuxièmes charges additionnelles avant la densification.

## Patentansprüche

1. Verfahren (200, 300) zum Herstellen einer Turbomaschinenschaufel (100) aus Keramikmatrixverbundmaterial, die zumindest einen Strukturteil (110) und einen Funktionsteil (120), der einstückig mit dem Strukturteil ist, umfasst, wobei der Funktionsteil drei Funktionsabschnitte umfasst: eine stromabwärtige Wand (121), eine stromaufwärtige Wand (122) und eine Basisplattform (123) der Schaufel, und wobei das Verfahren Folgendes umfasst:
- Erhalten einer Baugruppe (210, 320), die eine erste Vorform des Funktionsteils umfasst, die auf einer zweiten Vorform des Strukturteils oder auf dem Strukturteil montiert ist, wobei die erste Vorform eine Faserverstärkung aus kurzen Fasern mit einer Länge zwischen 50 µm und 5000 µm umfasst und die zweite Vorform oder der Strukturteil eine gewebte Faserverstärkung umfasst, und
- Verdichten (220, 340) von zumindest der ersten Vorform der Baugruppe durch Infiltrieren mit einer geschmolzenen Zusammensetzung.

2. Verfahren zum Herstellen nach Anspruch 1, wobei die erste Vorform auf der zweiten Vorform montiert wird und wobei es gemeinsames Verdichten der ersten und der zweiten Vorform durch die geschmolzene Zusammensetzung gibt.

3. Verfahren zum Herstellen nach Anspruch 1, wobei die erste Vorform auf dem Strukturteil montiert ist und wobei die geschmolzene Zusammensetzung Löten des Funktionsteils mit dem Strukturteil ermöglicht.

4. Verfahren (300) zum Herstellen nach einem der Ansprüche 1 bis 3, wobei das Erhalten der Baugruppe (320) ferner Bilden der ersten Vorform umfasst, wobei dieses Bilden Bilden eines ersten Rohlings, der die Faserverstärkung aus kurzen Fasern umfasst, die in einem Bindemittel vorhanden ist, Entbindern des ersten Rohlings und Verdichten (310) des ersten entbinderten Rohlings umfasst, um die erste Vorform zu erhalten.

5. Verfahren zum Herstellen nach Anspruch 4, wobei der erste Rohling ferner erste zusätzliche Füllstoffe umfasst, die in dem Bindemittel vorhanden sind und sich von den kurzen Fasern der Verstärkung unterscheiden, wobei die ersten zusätzlichen Füllstoffe eine metallische oder keramische Oberfläche aufweisen.

6. Verfahren zum Herstellen nach einem der Ansprüche 1, 2, 4 oder 5, wobei die erste Vorform auf der zweiten Vorform montiert ist und das Erhalten der Baugruppe Formgeben eines zweiten Rohlings umfasst, der die gewebte Faserverstärkung umfasst, um die zweite Vorform zu erhalten.

7. Verfahren zum Herstellen nach Anspruch 6, wobei der zweite Rohling ferner zweite zusätzliche Füllstoffe umfasst, die eine metallische oder keramische Oberfläche aufweisen.

8. Verfahren (300) zum Herstellen nach einem der Ansprüche 5, 6 oder 7 in Verbindung mit Anspruch 5, wobei ein Konsolidieren (330) der ersten Vorform durch Sintern der ersten zusätzlichen Füllstoffe vor dem Verdichten umgesetzt wird.

9. Verfahren zum Herstellen nach Anspruch 7 oder 8 in Verbindung mit Anspruch 7, wobei ein Konsolidieren der zweiten Vorform durch Sintern der zweiten zusätzlichen Füllstoffe vor dem Verdichten umgesetzt wird.

## Claims

1. A method (200, 300) for manufacturing a turbomachine blade (100) made of ceramic matrix composite material, comprising at least a structural part (110) and a functional part (120) secured to the structural part, the functional part comprising three functional portions: a downstream wall (121), an upstream wall (122) and a root platform (123) of the blade and the method comprising:
- obtaining an assembly (210, 320) comprising a first preform of the functional part that is mounted on a second preform of the structural part or on the structural part, the first preform comprising a fibrous reinforcement of short fibres having a length between 50 µm and 5000 µm, and the second preform or the structural part comprising a woven fibrous reinforcement, and
- densification (220, 340) of at least the first preform of the assembly by infiltration with a molten composition.

2. The manufacturing method according to claim 1, wherein the first preform is mounted on the second preform and wherein there is a co-densification of the first and second preforms by the molten composition.

3. The manufacturing method according to claim 1, wherein the first preform is mounted on the structural part and wherein the molten composition solders the functional part to the structural part.

4. The manufacturing method (300) according to any one of claims 1 to 3, wherein obtaining the assembly (320) further comprises forming the first preform, this forming comprising of forming a first blank comprising the fibrous reinforcement of short fibres present in a binder, debonding the first blank and compacting (310) the first debonded blank so as to obtain the first preform.

5. The manufacturing method according to claim 4, wherein the first blank further comprises first additional fillers present in the binder and distinct from the short fibres of the reinforcement, the first additional fillers having a metallic or ceramic surface.

6. The manufacturing method according to any one of claims 1, 2, 4 or 5, wherein the first preform is mounted on the second preform and obtaining the assembly comprises forming a second blank comprising the woven fibrous reinforcement, so as to obtain the second preform.

7. The manufacturing method according to claim 6, wherein the second blank further comprises second additional fillers having a metal or ceramic surface.

8. The manufacturing method (300) according to any one of claims 5, 6 or 7, referring to claim 5, wherein a consolidation (330) of the first preform is carried out by sintering the first additional fillers before the densification.

9. The manufacturing method according to claim 7 or 8 referring to claim 7, wherein a consolidation of the second preform is carried out by sintering the second additional fillers before densification.
